(19) Europäisches Patentamt
European Patent Office
Office européen des brevets

(11) **EP 4 564 881 A1**

(12) **EUROPEAN PATENT APPLICATION**
published in accordance with Art. 153(4) EPC

(43) Date of publication:
04.06.2025 Bulletin 2025/23

(21) Application number: 23845519.0

(22) Date of filing: 25.07.2023

(51) International Patent Classification (IPC):
*H04W 24/02* (2009.01)   *H04W 24/08* (2009.01)
*H04W 24/10* (2009.01)   *H04L 5/00* (2006.01)
*H04W 4/38* (2018.01)

(52) Cooperative Patent Classification (CPC):
**H04W 4/38; H04L 5/0053; H04L 5/0091;**
**H04L 27/0006; H04W 24/02; H04W 24/08;**
**H04W 24/10**

(86) International application number:
**PCT/CN2023/109012**

(87) International publication number:
**WO 2024/022309 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.07.2022 CN 202210884815

(71) Applicant: **Spreadtrum Semiconductor (Nanjing)
Co., Ltd.**
**Nanjing, Jiangsu 211899 (CN)**

(72) Inventor: **LI, Qiyishu**
**Shanghai 201203 (CN)**

(74) Representative: **Mewburn Ellis LLP**
**Aurora Building**
**Counterslip**
**Bristol BS1 6BX (GB)**

(54) **COMMUNICATION METHOD AND APPARATUS, AND COMPUTER-READABLE STORAGE MEDIUM**

(57)    A communication method and apparatus and a computer-readable storage medium are provided. The communication method includes: sending device capability information, the device capability information indicating support for a sensing function; receiving a sensing signal; and reporting a sensing measurement result according to the sensing signal. With the above method, sensing measurement can be triggered conveniently and the success rate of obtaining the sensing measurement result can be improved.

TERMINAL DEVICE          NETWORK DEVICE

101, SEND DEVICE CAPABILITY INFORMATION

102, SEND SENSING SIGNAL

103, SEND SENSING MEASUREMENT RESULT

FIG. 1

**Description**

CROSS-REFERENCE TO RELATED APPLICATION(S)

This application claims priority to Chinese Patent Application No. 202210884815.5, entitled "communication methods and apparatuses, and computer readable storage medium", filed July 25, 2022, the entire disclosure of which is hereby incorporated by reference.

TECHNICAL FIELD

This disclosure relates to the field of wireless communication technology, and in particular to a communication method and apparatus, and a computer-readable storage medium.

BACKGROUND

With the development of information technology, deep integration of mobile communication technology, big data, and artificial intelligence technology has led to a broadening of people's demand for information, gradually expanding from daily mobile communication to richer information collection and information processing and computing. The next-generation communication network (6G network) is expected to be a convergence of mobile communication network, sensing network, and computing power network. The sensing network in a narrow sense is a system with capabilities such as target localization (ranging, speed, angular), target imaging, target detection, target tracking, and target identification. The sensing network in a broad sense refers to a system that has the ability to sense properties and states of all services, networks, terminal devices, and environmental objects.

Integrated Sensing and Communication refers to a new type of information processing technology that simultaneously realizes sensing and communication functions coordination based on software and hardware resource sharing or information sharing, which can effectively improve the system spectrum efficiency, hardware efficiency, and information processing efficiency.

In existing implementations of Integrated Sensing and Communication, it is difficult to conveniently trigger the sensing measurement, and the success rate of obtaining a sensing measurement result is low.

SUMMARY

Embodiments of the disclosure provide a communication method that can conveniently trigger the sensing measurement and improve the success rate of obtaining the sensing measurement result.

In a first aspect, embodiments of the disclosure provide a communication method, which can be applied to a terminal device, a chip or a chip module in the terminal device, and the like. The application to the terminal device is described below as an example. The method includes the following. The terminal device sends device capability information, where the device capability information indicates support for a sensing function. The terminal device receives a sensing signal. The terminal device reports a sensing measurement result according to the sensing signal.

Optionally, the terminal device sends the device capability information during establishment of an initial connection.

Optionally, the method further includes that the terminal device receives a capability inquiry message. For example, the terminal device receives the capability inquiry message from a network device, and sends the device capability information to the network device.

Optionally, the method further includes that the terminal device receives first indication information, where the first indication information indicates activating the sensing function. For example, the network device receives from the terminal device the device capability information that indicates support for the sensing function, then the network device sends the first indication information to the terminal device, which facilitates the terminal device to activate the sensing function according to the first indication information, so as to achieve sensing measurement.

Optionally, the method further includes that the terminal device sends a sensing measurement request. For example, the terminal device activates the sensing function and sends the sensing measurement request to the network device. For example, the terminal device actively activates the sensing function if the terminal device supports the sensing function. Alternatively, the terminal device activates the sensing function according to an instruction or notification from the network device. The embodiments of the present disclosure do not limit the manner in which the terminal device activates the sensing function. Alternatively, if the terminal device supports the sensing measurement function, the terminal device sends the sensing measurement request to the network device when there is a demand for sensing measurement. Alternatively, the terminal device may periodically send the sensing measurement request to the network device. The embodiments of the present disclosure do not limit the manner of triggering the terminal device to send the sensing measurement request.

Optionally, the method further includes that the terminal device receives first configuration information. The first configuration information indicates at least one of: a reporting format of the sensing measurement result, a reporting content of the sensing measurement result, a time-domain resource for reporting the sensing measurement result, a slot for reporting the sensing measurement result, a reporting period of the sensing measurement result, or a channel for carrying the sensing measurement result.

For example, the first configuration information may be a sensing-signal measurement report configuration, such as *CSIReportconfig.* For example, the network device may receive the device capability information of the terminal device that indicates support for the sensing function, and send the first configuration information to the terminal device.

Further, the terminal device receives the first configuration information and sends the sensing signal according to the first configuration information.

Optionally, the method further includes that the terminal device sends second indication information, where the second indication information indicates a device type of the terminal device.

Optionally, the method further includes that the terminal device receives second configuration information. The second configuration information is used to configure the sensing resource, or the second configuration information is used to indicate the sensing resource. The sensing resource is used for communication of the sensing signal. For example, the sensing resource may include at least one of a time-domain resource, a frequency-domain resource, or the like. Further, the terminal device receives the sensing signal on the sensing resource.

For example, the terminal device sends a resource request to the network device, where the resource request is used to request the sensing resource. It should be noted that the resource request is used to request the network device to configure the sensing resource for the terminal device, without limitation of what kind of resources is expected to be configured. In this case, the network device receives the resource request, configures the sensing resource for the terminal device, and then sends the second configuration information to the terminal device.

Alternatively, the resource request may be used to request the network device to configure a specific type of sensing resources for the terminal device. For example, the resource request is used to request configuration of a first bandwidth as the frequency-domain resource to send the sensing signal. In this case, the network device may configure the sensing resource for the terminal device by taking the resource request into consideration, and then configure the sensing resource to the terminal device. It should be understood that the sensing resource actually configured by the network device and the sensing resource requested by the terminal device may be the same or different. In a specific application, the terminal device sends the sensing signal to the network device on the sensing resource actually configured by the network device.

Optionally, when the reporting of the sensing measurement result conflicts with reporting of other service information, the terminal device determines that a reporting priority of the sensing measurement result is higher than a reporting priority of the other service information. In this case, the terminal device reports the sensing measurement result.

Optionally, when the reporting priority of the sensing measurement result is lower than the reporting priority of other service information, the terminal device sends a measurement report corresponding to the other service information.

Optionally, if the device capability information reported by the terminal device indicates that the sensing function is not supported, the network device may not send a sensing signal to the terminal device, which can help to save signaling overhead and improve resource utilization.

In a second aspect, embodiments of the disclosure provide a communication method, which can be applied to a network device, a chip or a chip module in the network device, and the like. The application to the network device is described below as an example. The method includes the following. The network device receives device capability information, where the device capability information indicates support for a sensing function. The network device sends a sensing signal, and the network device receives a sensing measurement result.

Optionally, the network device receives the device capability information during establishment of an initial connection.

Optionally, the method further includes that the network device sends a capability inquiry message. For example, the network device sends the capability inquiry message to the terminal device. The terminal device receives the capability inquiry message and then sends the device capability information to the network device. It should be noted that the above is only one manner of triggering the terminal device to send capability information, which is not limited in the embodiments of the present disclosure.

Optionally, the method further includes that the network device sends first indication information, where the first indication information indicates activating the sensing function. For example, the network device receives from the terminal device the device capability information. If the device capability information indicates that the sensing function is supported, then the network device sends the first indication information. It should be noted that if the device capability information indicates that the sensing function is not supported, the network device may not send the first indication information to the terminal device.

Optionally, the method further includes that the network device receives a sensing measurement request. For example, the terminal device activates the sensing function and then sends the sensing measurement request to the network device. The network device receives the sensing measurement request and then sends the sensing signal to the terminal device.

Optionally, the method further includes that the network device sends first configuration information. The first configuration information indicates at least one of: a reporting format of the sensing measurement result, a reporting content of the sensing measurement result, a time-domain resource for reporting the sensing measurement result, a slot for reporting the sensing measurement result, a reporting period of the sensing measurement result, or a channel for carrying the sensing measurement result.

Optionally, the network device sends the first configuration information according to a device type of the terminal device.

Optionally, the network device sends the sensing signal according to the device type of the terminal device.

Optionally, the method further includes that the network device receives second indication information. The second indication information indicates the device type of the terminal device.

Optionally, the network device further sends second configuration information. The second configuration information is used to configure a sensing resource. The sensing resource is used for communication of the sensing signal. The terminal device receives the second configuration information and receives the sensing signal from the network device on the sensing resource configured through the second configuration information.

For example, the network device receives a sensing measurement request from the terminal device and configures the sensing resource for the terminal device. Then the network device send the second configuration information to the terminal device. Alternatively, the network device may also receive the device capability information that indicates support for the sensing function, and configure the sensing resource for the terminal device. Then the network device sends the second configuration information to the terminal device so that the terminal device can receive the sensing signal from the network device on the corresponding sensing resource.

It should be noted that the embodiments of the present disclosure does not limit the manner of triggering the network device to send the second configuration information to the terminal device.

It should also be noted that the terminal device in the above-mentioned first aspect and second aspect can be understood as a receiving device of the sensing signal, and the network device can be understood as a sending device of the sensing signal.

In a third aspect, embodiments of the disclosure provide another communication method, which can be applied to a terminal device, a chip or a chip module in the terminal device, and the like. The application to the terminal device is described below as an example. The method includes the following. The terminal device receives resource configuration information, where the resource configuration information is used to configure a sensing resource. The terminal device sends a sensing signal on the sensing resource.

Optionally, the terminal device sends a sensing measurement request. For example, a network device receives the sensing measurement request and sends the resource configuration information to the terminal device. For example, the sensing measurement request may also include device capability information. The device capability information indicates support for the sensing function.

For example, the sensing measurement request is used to request configuration of the sensing resource.

Optionally, the terminal device sends device capability information, where the device capability information indicates support of the sensing function. For example, the network device receives the device capability information, configures the sensing resource for the terminal device, and then sends the resource configuration information to the terminal device.

Optionally, the resource configuration information includes at least one of: a time-domain resource location, a frequency-domain resource location, a transmission period of the sensing signal, a time offset, or a signal transmission power. The transmission period and time offset of the sensing signal correspond to the parameter *periodicityAndOffset*. The unit of the transmission period is a slot or a symbol, and the unit of the time offset may be a slot. The symbol position corresponding to the sensing signal may be determined according to the time offset within the transmission period.

In a fourth aspect, embodiments of the disclosure further provide yet another communication method, which can be applied to a network device, a chip or a chip module in the network device, and the like. The application to the network device is described below as an example. The method includes the following. The network device sends resource configuration information. The resource configuration information is used to configure a sensing resource. The network device receives a sensing signal on the sensing resource. Then the network device performs sensing measurement based on the sensing signal.

Optionally, the network device receives the sensing measurement request and sends resource configuration information to the terminal device.

Further, if the network device agrees to the sensing measurement request, the network device sends the resource configuration information to the terminal device.

Optionally, if the network device needs to obtain the sensing signal sent by the terminal device for measurement, the network device may send the resource configuration information to the terminal device to instruct the terminal device to send the sensing signal.

Optionally, the sensing measurement request is used to request configuration of the sensing resource.

Optionally, the network device receives device capability information, where the device capability information indicates support for the sensing function, and then the network device sends the resource configuration information.

Optionally, the resource configuration information includes at least one of: a time-domain resource location, a frequency-domain resource location, a transmission period of the sensing signal, a time offset within the transmission period, or a signal transmission power. The transmission period and time offset of the sensing signal correspond to the parameter *periodicityAndOffset*. The unit of the transmission period is a slot or a symbol, and the unit of the time offset may be a slot. The symbol position corresponding to the sensing signal may be determined according to the time offset within the transmission period.

Optionally, the network device receives the sensing measurement request and further sends an acknowledgement message which indicates agreement to the sensing measurement. It should be noted that in the embodiments of the present disclosure, the acknowledgement message may be sent simultaneously with the resource configuration information, or the acknowledgement message may be sent first and then the resource configuration information may be sent.

The network device in the third and fourth aspects above is a receiving device of the sensing signal, and the terminal device is a sending device of the sensing signal.

In a fifth aspect, embodiments of the present disclosure further provide a communication apparatus. The communication apparatus includes a sending unit configured to send device capability information, the device capability information indicating support for a sensing function; a receiving unit configured to receive a sensing signal; and a processing unit configured to obtain a sensing measurement result by performing sensing measurement according to the sensing signal. The sending unit is further configured to send the sensing measurement result.

Optionally, the communication apparatus may be a terminal device, a chip, a chip module, etc.

In a sixth aspect, embodiments of the present disclosure further provide another communication apparatus. The communication apparatus includes a receiving unit configured to receive device capability information, the device capability information indicating support for a sensing function; and a sending unit configured to send a sensing signal. The receiving unit is further configured to receive a sensing measurement result.

Optionally, the communication apparatus may be a network device, a chip, a chip module, etc.

In a seventh aspect, embodiments of the present disclosure further provide another communication apparatus. The communication apparatus includes a receiving unit configured to receive resource configuration information, where the resource configuration information is used to configure a sensing resource. The communication apparatus further includes a sending unit configured to send a sensing signal on the sensing resource.

Optionally, the communication apparatus may be a terminal device, a chip, a chip module, etc.

In an eighth aspect, embodiments of the present disclosure further provide another communication apparatus. The communication apparatus includes a sending unit configured to send resource configuration information. The resource configuration information is used to configure a sensing resource. The communication apparatus further includes a receiving unit configured to receive a sensing signal on the sensing resource and a processing unit configured to perform sensing measurement based on the sensing signal.

Optionally, the communication apparatus may be a network device, a chip, a chip module, etc.

The embodiments of the present disclosure further provides a computer-readable storage medium, which is a non-volatile storage medium or a non-transitory storage medium, on which a computer program is stored. When the processor runs the computer program, the method of the first aspect or any optional method of the first aspect is implemented, or the method of the second aspect or any optional method of the second aspect is implemented, or the method of the third aspect or any optional method of the third aspect is implemented, or the method of the fourth aspect or any optional method of the fourth aspect is implemented.

The embodiments of the present disclosure further provides another communication apparatus, which includes a memory and a processor. The memory stores a computer program that can be run on the processor. When the processor runs the computer program, the method of the first aspect or any optional method of the first aspect is implemented, or the method of the second aspect or any optional method of the second aspect is implemented, or the method of the third aspect or any optional method of the third aspect is implemented, or the method of the fourth aspect or any optional method of the fourth aspect is implemented.

Compared with the related art, the technical solutions in the embodiments of the present disclosure have the following beneficial effects.

The terminal device sends the device capability information to the network device to inform the network device that the terminal device supports the sensing function. After learning that the terminal device supports the sensing function, the network device may send the sensing signal to the terminal device. The terminal device receives the sensing signal sent by the network device, performs corresponding sensing measurement, and reports the sensing measurement result to the network device. The network device receives the sensing measurement result reported by the terminal device. As can be seen, when the network device learns that the terminal device can support the sensing function, the network device sends the sensing signal to the terminal device to trigger the terminal device to perform the sensing measurement. The terminal device reports the sensing measurement result to the network device. The network device can obtain the sensing measurement result and can schedule the terminal device accordingly based on the sensing measurement result. In this way, the terminal device can be triggered on demand to perform the sensing measurement and the success rate of obtaining the sensing measurement result can be improved.

For example, the reporting process of the sensing measurement result may be modified and improved based on the existing reporting process of CSI measurement report, and effectively compatible with the existing protocol(s).

BRIEF DESCRIPTION OF THE DRAWINGS

FIG. 1 is a schematic flowchart of a communication method according to embodiments of the present disclosure.
FIG. 2 is a schematic flowchart of another communication method according to embodiments of the present disclosure.
FIG. 3 is a schematic flowchart of yet another communication method according to embodiments of the present disclosure.
FIG. 4 is a schematic structural diagram of a communication apparatus according to embodiments of the present disclosure.
FIG. 5 is a schematic structural diagram of another communication apparatus according to embodiments of the present disclosure.
FIG. 6 is a schematic structural diagram of yet another communication apparatus according to embodiments of the present disclosure.
FIG. 7 is a schematic structural diagram of yet another communication apparatus according to embodiments of the present disclosure.

DETAILED DESCRIPTION

In the related art, the network device has no knowledge of whether the terminal device support a sensing function, and the terminal device also does not know when to start the sensing measurement. When there is a demand for sensing measurement, if the network device directly instructs the terminal device to perform the sensing measurement, but the terminal device does not support the sensing function and thus is unable to perform the sensing measurement, the network device cannot obtain the sensing measurement result.

In embodiments of the present disclosure, in the case that the network device learns that the terminal device can support the sensing function, the network device sends a sensing signal to the terminal device to trigger the terminal device to perform the sensing measurement. The terminal device reports the sensing measurement result to the network device, so that the network device can learn the sensing measurement result and can schedule the terminal device accordingly based on the sensing measurement result. Therefore, the sensing measurement by the terminal device can be triggered on demand and the success rate of obtaining the sensing measurement result can be improved.

The specific embodiments of the present disclosure are described in detail below with reference to the accompanying drawings.

Firstly, some terms involved in the embodiments of the disclosure will be explained to facilitate understanding of those skilled in the art.

1. Terminal device: The terminal device in the embodiments of the disclosure is a device having wireless communication functions, and may be referred to as a terminal, a user equipment (UE), a mobile station (MS), a mobile terminal (MT), an access terminal device, an in-vehicle terminal device, a terminal device in industrial control, a UE unit, a UE station, a mobile station, a remote station, a remote terminal device, a mobile device, a UE terminal device, a wireless communication device, a UE agent, a UE apparatus, or the like. The terminal device may be stationary or mobile. It should be noted that, the terminal device may support at least one wireless communication technology, for example, long term evolution (LTE), new radio (NR), and the like. For example, the terminal device may be a mobile phone, a tablet computer (pad), a desktop computer, a notebook computer, an all-in-one computer, an in-vehicle terminal, a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) telephone, a wireless local loop (WLL) station, a personal digital assistant (PDA), various devices having wireless communication functions such as a handheld device, a computing device, or other processing devices connected to a wireless modem, a wearable device, a terminal device in a future mobile communication network, or a terminal device in a future evolved public land mobile network (PLMN). In some embodiments of the disclosure, the terminal device may also be an apparatus with transceiver functions, for example, a system-on-chip (SOC). The SOC may include a chip, and may further include other discrete components.

2. Network device: The network device in the embodiments of the disclosure is a device for providing wireless communication functions for the terminal device, and may also be referred to as a radio access network (RAN) device, an access network element, an access network device, or the like. The network device may support at least one wireless communication technology, such as LTE and NR. Exemplarily, the network device includes, but is not limited to, a next-generation base station (gNB), an evolved node B (eNB), and a radio network controller (RNC), a node B (NB), a base station controller (BSC), a base transceiver station (BTS), a home base station (for example, a home evolved node B, or home node B (HNB)), a baseband unit (BBU), a sending and receiving point (TRP), a sending point (TP), a mobile switching center, etc. in a $5^{th}$-generation (5G) mobile communication system. The network device may also be a radio controller, a centralized unit (CU), and/or a distributed unit (DU) in a cloud radio access network (CRAN) scenario, or the network device may be a relay station, an access point, an in-vehicle device, a terminal device, a wearable device, and a network device in future mobile communications or a network device in a future evolved PLMN, etc. In some embodiments, the network device may also be a device that provides wireless communication functions for the terminal device, such as an SOC. For example, the SOC may include a chip and may further include other discrete components.

In some embodiments, the network device may also communicate with an internet protocol (IP) network, for example, the Internet, a private IP network, or other data networks.

3. Sensing signal. In the embodiments of the present disclosure, the sensing signal is a signal used for sensing measurement. It should be noted that in the embodiments of the present disclosure, the sensing signal may also be referred to as a sensing measurement signal, a sensing reference signal, a sensing measurement reference signal, etc., and the name of the sensing signal is not limited. For example, the signal used for sensing measurement may reuse an existing reference signal, that is, an existing reference signal can be directly used as the sensing signal. For example, the sensing signal may be a channel state information reference signal (CSI-RS), a sounding reference signal (SRS), etc. Alternatively, a new reference signal may also be designed as a sensing signal.

4. Sensing measurement result. In the embodiments of the present disclosure, the sensing measurement result may be used to characterize a motion state, a posture, a position, etc. of the terminal device, and may also include a terrain feature, an environmental feature, etc. between the network device and the terminal device. For example, if the terminal device is a drone, the sensing measurement result includes the position of the drone and the moving speed of the drone. For another example, if the terminal device is a smart phone, the sensing measurement result includes the posture of the smart phone and the moving speed of the smart phone.

It can be understood that the above content included in the sensing measurement result is only for exemplary description. For terminal devices of different purposes and different device types, the content included by the sensing measurement results may be the same, or may be partially or completely different.

5. Sensing resource. In the embodiments of the present disclosure, the sensing resource may refer to a resource for sending the sensing signal and/or a resource for receiving the sensing signal.

For example, the sensing resource may include at least one of a frequency-domain resource for sending the sensing signal, a frequency-domain resource for receiving the sensing signal, a time-domain resource for sending the sensing signal, or a time-domain resource for receiving the sensing signal.

For another example, the sensing resource may also include a code-domain resource for sending the sensing signal and/or a code-domain resource for receiving the sensing signal. For another example, the sensing resource may also include a spatial-domain resource for sending the sensing signal and/or a spatial-domain resource for receiving the sensing signal.

Embodiment 1: The network device sends a sensing signal, and the terminal device receives the sensing signal and performs sensing measurement. That is, the network device acts as a sending device of the sensing signal, and the terminal device acts as a receiving device of the sensing signal.

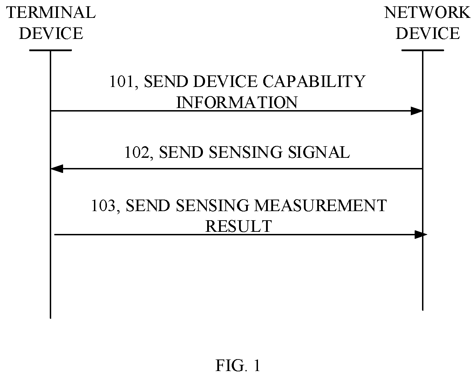

FIG.1 is a schematic flowchart of a communication method in Embodiment 1 of the present disclosure. The method includes the following operations.

In operation 101, the terminal device sends device capability information. Correspondingly, the network device receives the device capability information.

In a specific implementation, the terminal device may send the device capability information to the network device.

Specifically, in an embodiment of the present disclosure, the terminal device may send the device capability information to the network device through event triggering.

For example, the terminal device sends the device capability information to the network device during establishment of an initial connection. That is, the terminal device sends the device capability information to the network device during establishment of an initial RRC connection with the network device. For example, the terminal device sends an RRC connection establishment request to the network device, where the RRC connection establishment request includes the device capability information.

For another example, the network device sends a capability inquiry message to the terminal device. The terminal device receives the capability inquiry message and feeds back the device capability information to the network device.

It should be noted that the sending of the device capability information to the network device by the terminal device may also be triggered in other manners, which is not limited in the embodiments of the present disclosure.

In operation 102, the network device receives the device capability information, where the device capability information indicates support for the sensing function, and then the network device sends a sensing signal. Correspondingly, the terminal device receives the sensing signal.

In some embodiments of the present disclosure, in the case that the terminal device supports the sensing function, the sensing function may be always in an activated (ON) state.

Optionally, in some other embodiments of the present disclosure, the network device receives the device capability information, where the device capability information indicates support for the sensing function, and then the network device sends first indication information to the terminal device, where the first indication information indicates activating the sensing function. The terminal device receives the first indication information, activates/enables/turns on the sensing function, and then receives the sensing signal.

For example, when the device capability information indicates support of the sensing function, the network device receives the device capability information, and sends the first indication information to the terminal device if the network device agrees to perform sensing measurement.

The network device may instruct the terminal device to activate the sensing function through RRC signaling. For example, the network device may instruct the terminal device to activate the sensing function by configuring *SensingON* in the RRC signaling.

Specifically, the network device can set a dedicated field in the RRC signaling, where a value of the dedicated field may be used to determine whether the first indication information is carried. The bit length of the dedicated field may be 1 bit or multiple bits.

For example, if the bit length of the dedicated field is 1 bit and the value is "1", it indicates that the RRC signaling carries the first indication information indicating that the terminal device activates the sensing function. If the value of the dedicated field is "0", it indicates that the first indication information is not sent to the terminal device, and accordingly the terminal device does not need to activate the sensing function.

As an optional embodiment, the network device may send the first indication information to the terminal device before sending the sensing signal, so as to increase the possibility that the terminal device receives the sensing signal.

Alternatively, after the terminal device receives the first indication message and activates the sensing function, the terminal device sends an indication that the sensing function has been activated to the network device. The network device receives the indication that the sensing function has been activated, and sends the sensing signal to the terminal device.

Alternatively, the terminal device may also actively activate the sensing function based on a certain strategy or algorithm. The embodiments of the present disclosure does not limit the way to trigger the terminal device to activate the sensing function.

For example, the network device may send the sensing signal on a corresponding sensing resource, and the terminal device may receive the sensing signal on the corresponding sensing resource. For example, the sensing resource used to send and receive the sensing signal may be configured by the network device to the terminal device.

For example, the network device sends resource configuration information to the terminal device. The resource configuration information is used to configure the sensing resource. It should be noted that the resource configuration information here is equivalent to the second configuration information in the summary of the disclosure.

For example, the resource configuration information may indicate at least one of the following information to configure the sensing resource: a time-domain resource location, a frequency-domain resource location, a transmission period of the sensing signal, a time offset, or a signal transmission power.

For example, the transmission period and the time offset of the sensing signal correspond to the parameter *periodicityAndOffset*. The unit of the transmission period is a slot or a symbol. The unit of the time offset may be a slot. The symbol position corresponding to the sensing signal may be determined according to the time offset within the transmission period.

In some embodiments, when the network device receives the device capability information and the device capability information indicates that the sensing function is supported, the network device sends the resource configuration information to the terminal device. The resource configuration information and the first indication information may be sent at the same time or at different times, which is not limited herein. Optionally, the resource configuration information and the first indication information may be sent through the same message or signaling, or may be sent through different messages or signaling, which is not limited herein.

In some other embodiments, the terminal device sends a sensing measurement request to the network device. The network device receives the sensing measurement request and sends resource configuration information to the terminal device. For example, after the terminal device activates the sensing function, the terminal device sends the sensing measurement request to the network device.

Further, in some embodiments, the network device configures a sensing resource for the terminal device according to a device type of the terminal device, and then sends the resource configuration information to the terminal device.

For example, the device type of the terminal device may be a drone, a handheld mobile device, a posture tracking and recognition device, an in-vehicle device, a wearable device, or another intelligent electronic device that support wireless communication. Different sensing resources can be configured for different device types.

Specifically, for a terminal device that requires higher accuracy of the sensing result (such as drone, vehicle-mounted device for autonomous driving, vehicle-mounted device for assisted driving, etc.), the sensing signals may be configured more densely on the time-frequency-domain resources. For a terminal device that requires lower accuracy of the sensing result (such as smart home device), the sensing signals may be configured more sparsely on the time-frequency-domain resources.

For the same terminal device, the requirements for the accuracy of the sensing results may also be different under different application scenarios or different performance indicators. For example, when the requirement for positioning accuracy for a certain terminal device is at the meter level, the sensing signals are configured relatively sparsely on the time-frequency-domain resources. For another example, when the requirement for positioning accuracy for the terminal device is at the centimeter level, the sensing signals are configured relatively densely on the time-frequency-domain resources.

In addition, in some embodiments of the present disclosure, the network device may also send the sensing signal to the terminal device according to the device type of the terminal device.

For example, different types of terminal devices corresponds to different types of sensing signals. The correspondence may be predefined by a protocol or indicated to the terminal device by the network device, which is not limited herein.

For example, if the device type of the terminal device is a drone, the sensing signal may be a signal for measuring a position, a posture, and a flight speed of the drone. For another example, if the device type of the terminal device is a handheld mobile device, the sensing signal sent by the network device is used to measure a moving speed, distribution of surrounding obstacles, etc. of the handheld mobile device.

The device type of the terminal device may be indicated by the terminal device to the network device, so that the network device can obtain the device type of the terminal device. For example, the terminal device sends second indication information to the network device, and the second indication information indicates the device type of the terminal device. For example, the terminal device may send the second indication information to the network device during the initial access to the network device. For example, the terminal device carries the second indication information in the RRC connection establishment request to indicate the device type of the terminal device to the network device. For another example, the terminal device may also indicate the device type of the terminal device to the network device in another message (such as RRC connection establishment completion message, RRC signaling, MAC CE, DCI). The embodiments of the present disclosure does not limit the specific implementation method of the terminal device indicating the device type of the terminal device to the network device. For example, the terminal device may also indicate the device type to the network device when sending the device capability information, or indicate the device type to the network device after activating the sensing function.

In operation 103, the terminal device receives the sensing signal and sends the sensing measurement result to the network device. Correspondingly, the network device receives the sensing measurement result.

For example, the terminal device receives the sensing signal, performs sensing measurement according to the sensing signal, and then sends the sensing measurement result to the network device. Accordingly, the network device receives the sensing measurement result. After receiving the sensing measurement result, the network device may schedule the terminal device according to the sensing measurement result.

For example, the terminal device performs sensing measurement based on the sensing signal, obtains the obstacle distribution information between the terminal device and the network device, and sends the above obstacle distribution information to the network device in the sensing measurement result. The network device receives the sensing measurement result, obtains the obstacle distribution information between the terminal device and the network device, and selects a beam that can directly point to the terminal device.

For another example, the terminal device performs sensing measurement to obtain environmental information between the terminal device and the network device, and reports the sensing measurement result. The network device receives the sensing measurement result, restores a transmission channel between the terminal device and the terminal device based on the environmental information, and then selects a corresponding pre-coding matrix.

In a specific example, the terminal device may carry the sensing measurement result in a channel state information (CSI) report and send to the network device. That is, the terminal device sends the CSI report to the network device, where the CSI report includes the sensing measurement result.

In some embodiments of the present disclosure, the terminal device may perform sensing measurement based on the sensing signal and related information of the sensing measurement result to generate the sensing measurement result. Then, the terminal device sends the sensing measurement result to the network device.

The related information of the sensing measurement result may include at least one of the following information: a reporting content of the sensing measurement result, a reporting format of the sensing measurement result, or a reporting period of the sensing measurement result.

For example, the reporting content of the sensing measurement result may be understood as a parameter required by the terminal device to measure and report. For terminal devices of different device types, the reporting contents of the sensing measurement result may be different.

For example, if the device type of the terminal device is a drone, the reporting content of the sensing measurement result includes a position of the drone and a posture of the drone.

Alternatively, the reporting periods of the sensing measurement results of terminal devices of different device types may also be different. For example, the drone has a fast speed and changes the posture rapidly. Therefore, for the terminal device with the device type of the drone, the corresponding reporting period of the sensing measurement result may be shorter, so that the sensing measurement result obtained by the network device is more reliable. For another example, a smartphone is generally in a low-speed motion state and the surrounding obstacle information of the terminal device with the device type of the smartphone may not change for a long time. Therefore, the reporting period of the sensing measurement result corresponding to the terminal device with the device type of smart phone may be relatively large, that is, the sensing measurement result is reported at a relatively large period, so as to save the power consumption of the terminal device.

For example, the reporting format of the sensing measurement result may include at least one of the following information: a length of the reported content, an order of information in the reported content, an encoding method of the reported content, etc.

In a specific implementation, for different types of terminal devices, reporting formats may be slightly different when the reported contents are different.

For example, for a terminal device related to measuring channel state information, the reported content may include obstacle distribution information, obstacle material information, etc., and the length of the reported content is relatively large.

For another example, for a terminal device used for security, the reported content may only include whether there is an external intrusion, and the length of the reported content is relatively small. For example, the reported content is indicated by a 1-bit value.

Specifically, in some embodiments of the present disclosure, the terminal device periodically reports the sensing measurement result. It should be noted that in this case, the network device can periodically send the sensing signal. Accordingly, the terminal device can periodically receive the sensing signal, and perform the sensing measurement after each reception of the sensing signal. Then the sensing measurement result obtained from each measurement may be reported to the network device. Alternatively, when the transmission period of the sensing signal is greater than the reporting period of the sensing measurement result, within one period of sensing measurement, each time the reporting period of the sensing measurement result is reached, the sensing measurement result reported to the network device is the sensing measurement result measured within this sensing measurement period. For example, the reporting period of the sensing measurement result is T, and the transmission period of the sensing signal is 3T. For another example, the reporting period of the sensing measurement result is T1, the transmission period of the sensing signal is T2, where T1≠T2.

Alternatively, the reporting period of the sensing measurement result is greater than the transmission period of the sensing signal. In this case, within one reporting period of the sensing measurement result, the terminal device may perform multiple sensing measurements. When it is necessary to report the sensing measurement result, the terminal device may select a sensing measurement result corresponding to the most recent sensing measurement for reporting, or the terminal device may select the best sensing measurement result among multiple sensing measurements for reporting.

That is, within one reporting period of the sensing measurement result, the terminal device may report the sensing measurement result corresponding to one sensing measurement.

Alternatively, within one reporting period of the sensing measurement result, if the terminal device performs multiple sensing measurements, the terminal device may aggregate and report the sensing measurement results obtained by the multiple sensing measurements.

In addition, the reporting period of the sensing measurement result may be in units of slots, milliseconds, symbols, etc. For example, if the reporting period of the sensing measurement result is in unit of a symbol, then the reporting period of the sensing measurement result may be 10 symbols.

Further, in some embodiments, the terminal device sends the sensing measurement result on a corresponding resource. It should be understood that the corresponding resource above may include a frequency-domain resource, a time-domain resource, or another resource, which is not limited herein.

Part or all of the information in the related information of the sensing measurement result may be predefined by the protocol or indicated by the network device to the terminal device. For example, the corresponding resource for reporting the sensing measurement result may be configured by the network device or selected by the terminal device, which is not limited herein.

In addition, in the embodiments of the present disclosure, the channel used to carry the sensing measurement result may be predefined by the protocol or indicated by the network device. For example, the channel used to carry the sensing measurement result may be a physical uplink shared channel (PUSCH) or a physical uplink control channel (PUCCH).

For example, if the amount of data corresponding to the sensing measurement result is large, the sensing measurement result may be carried through the PUSCH. If the amount of data corresponding to the sensing measurement result is small, the sensing measurement result may be carried through the PUCCH.

In a specific implementation, the network device sends the sensing-measurement-report configuration information to the terminal device. The sensing-measurement-report configuration information may include at least one of the following information: the reporting format of the sensing measurement result, the reporting content of the sensing measurement result, the frequency-domain resource used for reporting the sensing measurement result, the time-domain resource used for reporting the sensing measurement result, the reporting period of the sensing measurement result, and the channel used to carry the sensing measurement result.

It should be noted that the sensing-measurement-report configuration information may be equivalent to the first configuration information provided in the embodiments of the present disclosure.

It should be understood that when the reporting format of the sensing measurement result, the reporting content of the sensing measurement result, the frequency-domain resource for reporting the sensing measurement result, the time-domain resource for reporting the sensing measurement result, the reporting period of the sensing measurement result, and the channel for carrying the sensing measurement result are indicated by the network device, the network device can carry the reporting format of the sensing measurement result, the reporting content of the sensing measurement result, the frequency-domain resources for reporting the sensing measurement result, the time-domain resources for reporting the sensing measurement result, the reporting period of the sensing measurement result, and the channel for carrying the sensing measurement result in one configuration information to indicate to the terminal device. Optionally, part of the information may be carried in one configuration information to indicate to the terminal device, and the other part may be carried in another configuration information to indicate to the terminal device, which is not limited herein.

Alternatively, in the embodiments of the present disclosure, the framework of the CSI measurement report can be reused for the sensing measurement report. In this case, the network device can send configuration information for reporting the sensing measurement result to the terminal device by extending *CSIReportconfig.* For example, the configuration for reporting the sensing measurement result is realized by adding *reportquantity* for sensing measurement into *CSIReportconfig.*

For example, *reportquantity* for sensing measurement may include at least one of the following information: a reporting format of the sensing measurement result, a reporting content of the sensing measurement result, a frequency-domain resource for reporting the sensing measurement result, a time-domain resource for reporting the sensing measurement result, a reporting period of the sensing measurement result, or a channel for carrying the sensing measurement result.

It should be noted that in the embodiments of the present disclosure, the frequency-domain resources for reporting the sensing measurement result may be continuous or discontinuous. For example, the frequency-domain resources for reporting the sensing measurement result may be multiple continuous physical resource blocks. The time-domain resources for reporting the sensing measurement result may be continuous or discontinuous. For example, the time-domain resources for reporting the sensing measurement result may be one or more slots.

It should also be noted that, in addition to the above information, the *reportquantity* used for sensing measurement may also include other information. Specifically, for terminal devices of different device types, the configured *reportquantity* used for sensing measurement may have the same content, partially the same content, or a completely different content.

For example, when the device type of the terminal device is a drone, considering different postures and positions of the drone, the *reportquantity* used for sensing measurement may include *cri-RSRP-pos,* which is used to characterize geographic location information, flight speed, flight altitude, and flight posture of the drone. Therefore, the network device can clearly understand the geographic location, flight speed, flight altitude, and flight posture of the drone.

For another example, for a terminal device used for object tracking and posture recognition, the *reportquantity* used for sensing measurement may include *posture-speed. posture-speed* is used to characterize the posture and speed of the terminal device. Therefore, the network device can identify the posture and moving speed of the terminal device.

It can be understood that the sensing measurement results corresponding to different device types may not be completely the same. The sensing measurement result may include one or more of posture, speed, position, material, etc. For example, the content included in the sensing measurement result may be related to a specific application scenario. In practical applications, the network device may determine on demand the content that needs to be reported by the terminal device.

Further, in some embodiments, if the device capability information indicates that the sensing function is not supported, the network device does not need to send a sensing signal to the terminal device, which can help to save air interface resources.

For example, in embodiments of the present disclosure, in the case that the terminal device supports the sensing function, if the terminal device does not need to perform sensing measurement, the sensing measurement function is disabled/deactivated/turned off, which can help to save energy. For example, after the network device confirms that the sensing measurement is completed, such as when the network device receives the sensing measurement result, the network device sends a sensing-measurement-function deactivate indication to the terminal device, and the terminal device receives the sensing-measurement-function deactivate indication and deactivates the sensing measurement function. For another example, the terminal device can also actively deactivate the sensing measurement function after completing the sensing measurement, such as when the terminal device sends the sensing measurement result to the network device. The embodiments of the present disclosure does not limit the specific implementation of triggering the terminal device to deactivate the sensing measurement function.

In summary, in the embodiments of the present disclosure, when the network device learns that the terminal device can support the sensing function, the network device sends the sensing signal to the terminal device to trigger the terminal device to perform sensing measurement. The terminal device reports the sensing measurement result to the network device. The network device can obtain the sensing measurement result and can schedule the terminal device according to the sensing measurement result. As such, the terminal device can be triggered on demand to perform sensing measurement, and the success rate of obtaining the sensing measurement results can be improved.

Further, in specific applications, the measurement reporting of the sensing service may conflict with information reporting of other services, that is, the reporting of the sensing measurement result by the terminal device may conflict with the reporting of other service information. For example, the time-domain resource used by the terminal device to report the sensing measurement result conflicts with a time-domain resource used for reporting other service information. For another example, the frequency-domain resource used by the terminal device to report the sensing measurement result conflicts with a frequency-domain resource used for reporting other service information.

In a specific implementation, the network device may pre-assign reporting priorities for the sensing measurement result and for other service information, and the network device may send the configuration of the reporting priorities to the terminal device. Alternatively, the terminal device may also determine the reporting priority of the sensing measurement result and the reporting priority of other service information according to a preset priority setting rule.

In an embodiment of the present disclosure, the reporting priority of the sensing measurement result may be characterized as a priority of the sensing measurement result, and the reporting priority of other service information may be characterized as a priority of other service information.

When the reporting priority of the sensing measurement result is higher than the reporting priority of other service information, the sensing measurement result is sent to the network device first. Conversely, when the reporting priority of the sensing measurement result is lower than the reporting priority of other service information, the other service information is sent to the network device first. If the reporting priority of the sensing measurement result is the same as the reporting priority of other service information, the sensing measurement result may be sent to the network device first, or the other service report may be sent to the network device first.

It is known in the related art that the formula for the reporting priority of channel state information is:

$$\mathrm{Pri}_{icsi}(y, k, c, s) = 2 \cdot N_{cells} \cdot M_s \cdot y + N_{cells} \cdot M_s \cdot k + M_s \cdot c + s$$

In the above formula, the value of $\mathrm{Pri}_{icsi}$ is used to characterize the priority of the CSI report, and the smaller the value of $\mathrm{Pri}_{icsi}$, the higher the priority. $c$ is an index of a serving cell. $s$ represents an index of the CSI, and the value of s is determined by *reportConfigID*. $N_{cells}$ represents the maximum number of configurable serving cells, and the value of $N_{cells}$ is determined by the parameter *maxNrofServingCells* configured by the higher layer. $M_s$ represents the configurable maximum number of *CSI-ReportConfig,* and the value of $M_s$ is determined by a higher-layer parameter *maxNrofCSI-ReportConfigurations.* y=0 represents aperiodic reporting on PUCCH, y=1 represents semi-persistent reporting on PUSCH, y=2 represents semi-persistent reporting on PUCCH, and y=3 represents periodic reporting on PUCCH. k=0 represents that the report is used for beam reporting, and k=1 represents that the report is not used for beam reporting.

In the embodiments of the present disclosure, the above formula for the reporting priority can be improved.

Specifically, set k=2 to indicate that the report is used for reporting the sensing measurement result. In this case, the formula for the reporting priority of the channel state information is as follows:

$$\mathrm{Pri}_{icsi}(y, k, c, s) = 3 \cdot N_{cells} \cdot M_s \cdot y + N_{cells} \cdot M_s \cdot k + M_s \cdot c + s$$

In the embodiments of the present disclosure, the above formula for the reporting priority can also be modified as:

$$\mathrm{Pri}_{icsi}(y, k, c, s) = 2 \cdot N_{cells} \cdot M_s \cdot (y + \delta) + N_{cells} \cdot M_s \cdot k + M_s \cdot c + s$$

In the above, when the sensing function of the terminal device is not activated, $\delta$=0. When the sensing function of the terminal device is activated, the value of $\delta$ can be greater than 0 or less than 0. $\delta$>0 indicates that the reporting priority of the sensing measurement result is lower than the priority of the communication measurement result. $\delta$<0 indicates that the reporting priority of the sensing measurement result is higher than the priority of the communication measurement result. For different sensing services, the corresponding $\delta$ values can also be different, so that the reporting priorities of different sensing services can be known.

Therefore, using the above scheme, a corresponding solution for conflict occurred when reporting the sensing measurement result is provided in the above embodiments.

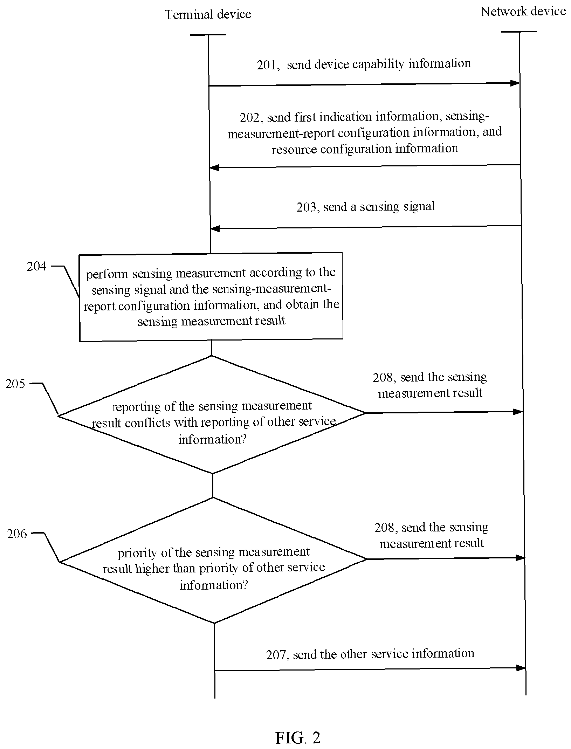

FIG. 2 is a schematic flowchart of another communication method of embodiment 1 of the present disclosure. The method specifically includes the following.

In operation 201, the terminal device sends device capability information to the network device, where the device capability information indicates support for the sensing function. Correspondingly, the network device receives the device capability information.

In the case where the terminal device does not support the sensing function, the terminal device may not indicate or notify the network device that the terminal device does not support the sensing function. Alternatively, in the case where the terminal device does not support the sensing function, the terminal device may also indicate to the network device that the terminal device does not support the sensing function.

In operation 202, the network device receives the device capability information and sends first indication information, sensing-measurement-report configuration information, and resource configuration information to the terminal device.

The first indication information is used to indicate activating the sensing function. For the first indication information, the sensing-measurement-report configuration information, and the resource configuration information, reference may be made to the description in the above embodiments of the present disclosure, which will not be repeated here.

It should be noted that the first indication information, the sensing-measurement-report configuration information, and the resource configuration information may be sent simultaneously. Optionally, the first indication information may be sent first, then the sensing-measurement-report configuration information may be sent, and finally the resource configuration information may be sent. The embodiments of the present disclosure does not limit the order of sending the first indication information, the sensing-measurement-report configuration information, and the resource configuration information.

In operation 203, the network device sends a sensing signal to the terminal device. Correspondingly, the terminal device receives the sensing signal based on the resource configuration information.

In operation 204, the terminal device receives the sensing signal, performs sensing measurement according to the sensing signal and the sensing-measurement-report configuration information, and obtains the sensing measurement result.

In operation 205, the terminal device determines whether the reporting of the sensing measurement result conflicts with reporting of other service information. If conflict exists, operation 206 is executed, otherwise operation 208 is executed.

In operation 206, the terminal device determines whether the priority of the sensing service is higher than the priority of the other service. If the priority of the sensing service is lower than the priority of the other service, operation 207 is executed. If the priority of the sensing service is higher than the priority of the other service, operation 208 is executed.

It should be noted that the priority of the sensing service can also be understood as the reporting priority of the sensing measurement result. The priority of the other service can also be understood as the reporting priority of other service information.

In operation 207, the terminal device sends the other service information to the network device. Accordingly, the network device receives the other service information.

In operation 208, the terminal device sends the sensing measurement result to the network device. Accordingly, the network device receives the sensing measurement result.

Embodiment 2: The terminal device sends a sensing signal, the network device receives the sensing signal and performs sensing measurement. That is, the terminal device acts as a sending device of the sensing signal, and the network device acts as a receiving device of the sensing signal.

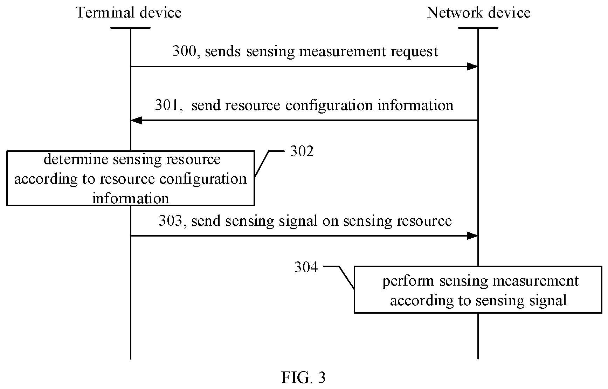

FIG.3 is a schematic flowchart of a communication method of Embodiment 2 of the present disclosure. The method specifically includes the following.

In operation 301, the network device sends resource configuration information to the terminal device. The resource configuration information can be used to configure a sensing resource. Correspondingly, the terminal device receives the resource configuration information.

In the embodiments of the present disclosure, the resource configuration information can be used to configure the sensing resource.

For example, the resource configuration information may indicate at least one of the following information to configure the sensing resource: a time-domain resource location, a frequency-domain resource location, a transmission period of the sensing signal, a time offset, or a signal transmission power.

For example, the transmission period and the time offset of the sensing signal correspond to the parameter *periodicityAndOffset.* The unit of the transmission period is a slot or a symbol. The unit of the time offset may be a slot. The above time offset may be the time offset within the transmission period of the sensing signal. The symbol position corresponding to the sensing signal may be determined by the time offset within the transmission period.

In operation 302, the terminal device determines the sensing resource according to the resource configuration information.

In operation 303, the terminal device sends the sensing signal to the network device on the sensing resource.

In operation 304, the network device performs sensing measurement according to the sensing signal.

The sending of the resource configuration information by the network device to the terminal device may be triggered when a certain condition is met.

In some embodiments, if the network device has a need to perform sensing measurement, that is, the network device needs to obtain the sensing signal sent by the terminal device for sensing measurement, the network device may send the resource configuration information to the terminal device.

In other embodiments, if the network device receives a sensing measurement request sent by the terminal device and the network device agrees to the request, the network device may send the resource configuration information to the terminal device.

For example, the terminal device may also perform the following operation 300.

In operation 300, the terminal device sends a sensing measurement request to the network device. Accordingly, the network device receives the sensing measurement request.

The network device may determine whether to agree to/accept the sensing measurement request. If the network device accepts the sensing measurement request, the network device may respond with ACK. If the network device rejects the sensing measurement request, the network device may respond with NACK.

The network device accepts the sensing measurement request and configures the resource configuration information for the terminal device. The network device may send the resource configuration information to the terminal device (corresponding to operation 301).

In some other embodiments, if the network device receives the device capability information sent by the terminal device, the network device may also send the resource configuration information to the terminal device.

For example, if the network device receives the device capability information sent by the terminal device and the device capability information indicates that the sensing function is supported, the network device sends the resource configuration information to the terminal device.

In some embodiments, the network device may reserve a portion of resources for sensing. When the network device agrees to the sensing measurement request sent by the terminal device, the network device may send first indication information to the terminal device, and instruct the terminal device through the first indication information to activate the sensing function. After receiving the first indication information, the terminal device may determine that the sensing function can be used.

In the embodiments of the present disclosure, the network device may carry the first indication information through higher-layer signaling, and the first indication information may be Sensing ON. The higher-layer signaling may be RRC signaling. After receiving the RRC signaling, the terminal device obtains the first indication information from the RRC signaling and then can use the sensing function.

In some embodiments, the resource configuration information and the first indication information may be sent at the same time or at different times, which is not limited herein. Optionally, the resource configuration information and the first indication information may be sent through the same message or signaling, or may be sent through different messages or signaling, which is not limited herein.

Further, in some embodiments, the network device configures the sensing resource for the terminal device according to a device type of the terminal device, and then sends the resource configuration information to the terminal device.

For example, the device type of the terminal device may be a drone, a handheld mobile device, a posture tracking and recognition device, an in-vehicle device, a wearable device, or another intelligent electronic device that support wireless communication. Different sensing resources can be configured for different device types.

Specifically, for a terminal device that requires higher accuracy of the sensing result (such as drone), the sensing signals may be configured more densely in the time-frequency-domain resources. For a terminal device that requires lower accuracy of the sensing result (such as in-vehicle device), the sensing signals may be configured more sparsely in the time-frequency-domain resources.

In summary, the network device configures and sends the resource configuration information to the terminal device, and the terminal device determines the sensing resource for sending the sensing signal according to the resource configuration information. The terminal device sends the sensing signal on the sensing resource, and the network device receives the sensing signal and performs corresponding sensing measurement. Therefore, the terminal device triggers the network device to perform the sensing measurement, so that the success rate of the measurement result can also be improved.

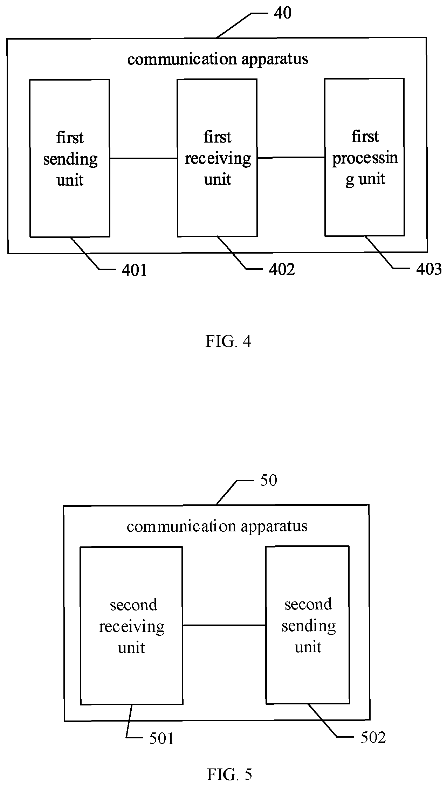

FIG. 4 is a communication apparatus 40 in embodiments of the present disclosure. The communication apparatus 40 includes a first sending unit 401, a first receiving unit 402, and a first processing unit 403.

The first sending unit 401 is configured to send device capability information, where the device capability information indicates support for the sensing function.

The first receiving unit 402 is configured to receive a sensing signal.

The first processing unit 403 is configured to perform sensing measurement according to the sensing signal to obtain a sensing measurement result.

The first sending unit 401 is further configured to report the sensing measurement result.

In a specific implementation, the above-mentioned communication apparatus 40 may correspond to a chip (such as a baseband chip) having a data processing function in the terminal device, or correspond to a chip module including a chip having a data processing function in the terminal device, or correspond to the terminal device.

FIG. 5 is another communication apparatus 50 in embodiments of the present disclosure. The communication apparatus 50 includes a second receiving unit 501 and a second sending unit 502.

The second receiving unit 501 is configured to receive device capability information, where the device capability information indicates support for the sensing function.

The second sending unit 502 is configured to send a sensing signal.

The second receiving unit 501 is further configured to receive a sensing measurement result obtained based on the sensing signal.

In a specific implementation, the above-mentioned communication apparatus 50 may correspond to a chip having a data processing function in the network device, or correspond to a chip module including a chip having a data processing function in the network device, or correspond to the network device.

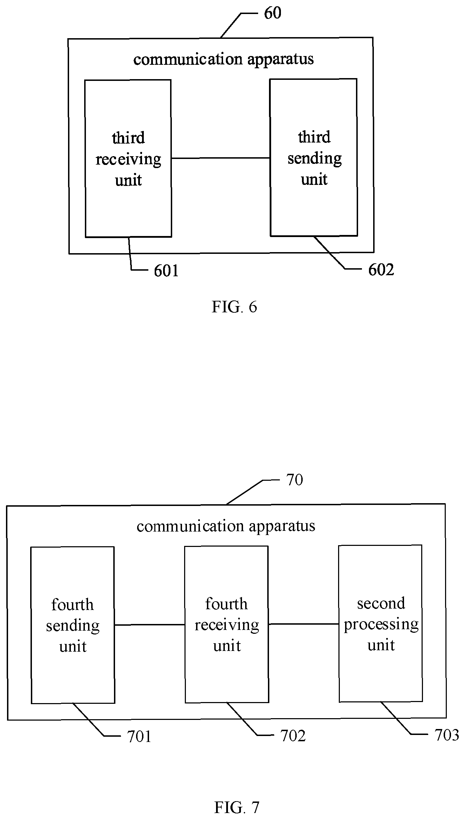

FIG. 6 is another communication apparatus 60 in embodiments of the present disclosure. The communication apparatus 60 includes a third receiving unit 601 and a third sending unit 602.

The third receiving unit 601 is configured to receive resource configuration information, where the resource configuration information is used to configure a sensing resource.

The third sending unit 602 is configured to send a sensing signal on the sensing resource.

In a specific implementation, the above communication apparatus 60 may correspond to a chip with a data processing function in the terminal device (such as a baseband chip), or correspond to a chip module including a chip with a data processing function in the terminal device, or correspond to the terminal device.

FIG. 7 is another communication apparatus 70 in embodiments of the present disclosure. The communication apparatus 70 includes a fourth sending unit 701, a fourth receiving unit 702, and a second processing unit 703.

The fourth sending unit 701 is configured to send resource configuration information, where the resource configuration information is used to configure the sensing resource.

The fourth receiving unit 702 is configured to receive a sensing signal from a terminal device on the sensing resource.

The second processing unit 703 is configured to perform sensing measurement based on the received sensing signal.

In a specific implementation, the communication apparatus 70 may correspond to a chip with a data processing function in the network device, or correspond to a chip module including a chip with a data processing function in the network device, or correspond to the network device.

In a specific implementation, the modules/units included in the devices and products described in the above embodiments may be software modules/units, hardware modules/units, or partly software modules/units and partly hardware modules/units.

For example, for each device or product applied to or integrated in a chip, each module/unit included therein may be implemented in hardware such as circuits, or at least part of the modules/units may be implemented in software programs, which run on a processor integrated in the chip, and the remaining (if any) modules/units may be implemented in hardware such as circuits. For each device or product applied to or integrated in a chip module, each module/unit included therein may be implemented in hardware such as circuits, and different modules/units may be located in the same component (such as a chip, circuit module, etc.) or in different components of the chip module, or at least part of the modules/units may be implemented in software programs, which run on a processor integrated in the chip module, and the remaining (if any) modules/units may be implemented in hardware such as circuits. For each device or product applied to or integrated in a terminal, each module/unit included therein may be implemented in hardware such as circuits, and different modules/units may be located in the same component (such as a chip, circuit module, etc.) or in different components of the terminal, or at least part of the modules/units may be implemented in software programs, which run on a processor integrated in a processor integrated in the terminal, and the remaining (if any) modules/units may be implemented in hardware such as circuits.

The embodiments of the present disclosure further provide a computer-readable storage medium, which is a non-volatile storage medium or a non-transitory storage medium, on which a computer program is stored. When the computer program is executed by a processor, the operations of the communication method provided in any embodiment are executed.

The embodiments of the present disclosure further provide a communication apparatus, including a memory and a processor. The memory stores a computer program that can be executed on the processor, and when the processor executes the computer program, the communication method provided in any of the above embodiments is executed.

A person skilled in the art can understand that all or part of the operations in the various methods of the above embodiments may be completed by instructing the relevant hardware through a program, and the program may be stored in a computer-readable storage medium. The storage medium may include ROM, RAM, disk or optical disk, etc.

Although the present disclosure is disclosed as above, the present disclosure is not limited thereto. Any person skilled in the art can make various changes and modifications without departing from the spirit and scope of the present disclosure, so the scope of protection of the present disclosure shall be subject to the scope defined by the claims.

## Claims

1. A communication method, comprising:

   sending device capability information, the device capability information indicating support for a sensing function;
   receiving a sensing signal; and
   reporting a sensing measurement result according to the sensing signal.

2. The method of claim 1, wherein sending the device capability information comprises:
   sending the device capability information during establishment of an initial connection.

3. The method of claim 1, further comprising:
   receiving a capability inquiry message.

4. The method of claim 1, further comprising:
   receiving first indication information, wherein the first indication information indicates activating the sensing function.

5. The method of any one of claims 1-4, further comprising:
   sending a sensing measurement request.

6. The method of claim 1, further comprising:
   receiving first configuration information, wherein the first configuration information indicates at least one of:
   a reporting format of the sensing measurement result, a reporting content of the sensing measurement result, a frequency-domain resource for reporting the sensing measurement result, a time-domain resource for reporting the sensing measurement result, a reporting period of the sensing measurement result, or a channel for carrying the sensing measurement result.

7. The method of any one of claims 1-6, further comprising:
   sending second indication information, wherein the second indication information indicates a device type of a receiving device of the sensing signal.

8. The method of claim 1, further comprising:
determining that a reporting priority of the sensing measurement result is higher than a reporting priority of other service information, when the reporting of the sensing measurement result conflicts with reporting of the other service information.

9. The method of claim 8, further comprising:
sending a measurement report corresponding to the other service information, when the reporting priority of the sensing measurement result is lower than the reporting priority of the other service information.

10. A communication method, comprising:

receiving device capability information, the device capability information indicating support for a sensing function;
sending a sensing signal; and
receiving a sensing measurement result.

11. The method of claim 10, wherein receiving the device capability information comprises:
receiving the device capability information during establishment of an initial connection.

12. The method of claim 10, further comprising:
sending a capability inquiry message.

13. The method of claim 10, further comprising:
sending first indication information, wherein the first indication information indicates activating the sensing function.

14. The method of any of claims 10-13, further comprising:
receiving a sensing measurement request.

15. The method of claim 10, further comprising:
sending first configuration information, wherein the first configuration information indicates at least one of:
a reporting format of the sensing measurement result, a reporting content of the sensing measurement result, a frequency-domain resource for reporting the sensing measurement result, a time-domain resource for reporting the sensing measurement result, a reporting period of the sensing measurement result, or a channel for carrying the sensing measurement result.

16. The method of claim 10, wherein sending the sensing signal comprises:
sending the sensing signal according to a device type of a receiving device of the sensing signal.

17. The method of any one of claims 10-16, further comprising:
receiving second indication information from a terminal device, wherein the second indication information indicates a device type of a receiving device of the sensing signal.

18. A communication apparatus, comprising:

a sending unit configured to send device capability information, the device capability information indicating support for a sensing function;
a receiving unit configured to receive a sensing signal; and
a processing unit configured to obtain a sensing measurement result by performing sensing measurement according to the sensing signal,
wherein the sending unit is further configured to send the sensing measurement result.

19. A communication apparatus, comprising:

a receiving unit configured to receive device capability information, the device capability information indicating support for a sensing function; and
a sending unit configured to send a sensing signal,
wherein the receiving unit is further configured to receive a sensing measurement result.

20. A computer-readable storage medium, wherein the computer-readable storage medium is a non-volatile storage medium or a non-transitory storage medium, and the computer-readable storage medium stores a computer program which, when executed by a processor, causes the processor to implement the communication method of any of claims 1- 9 or the communication method of any of claims 10-17.

21. A communication apparatus, comprising:

a processor; and
a memory storing a computer program which, when executed by the processor, causes the processor to implement the communication method of any of claims 1- 9 or the communication method of any of claims 10-17.

TERMINAL
DEVICE

NETWORK
DEVICE

101, SEND DEVICE CAPABILITY
INFORMATION

102, SEND SENSING SIGNAL

103, SEND SENSING MEASUREMENT
RESULT

FIG. 1

Terminal device                                                                 Network device

201, send device capability information

202, send first indication information, sensing-
measurement-report configuration information, and
resource configuration information

203, send a sensing signal

204 ⎯⎯ perform sensing measurement according to the
sensing signal and the sensing-measurement-
report configuration information, and obtain the
sensing measurement result

208, send the sensing
measurement result

205 ⎯⎯ reporting of the sensing measurement
result conflicts with reporting of other service
information?

208, send the sensing
measurement result

206 ⎯⎯ priority of the sensing measurement
result higher than priority of other service
information?

207, send the other service information

FIG. 2

Terminal device                                                                  Network device

300, sends sensing measurement request

301, send resource configuration information

determine sensing resource
according to resource configuration
information
— 302

303, send sensing signal on sensing resource

304 —
perform sensing measurement
according to sensing signal

FIG. 3

FIG. 4

FIG. 5

60

communication apparatus

third receiving unit

third sending unit

601

602

FIG. 6

70

communication apparatus

fourth sending unit

fourth receiving unit

second processing unit

701

702

703

FIG. 7

## INTERNATIONAL SEARCH REPORT

| International application No. |
|---|
| **PCT/CN2023/109012** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC:H04

Documentation searched other than minimum documentation to the extent that such documents are included in the fields searched

Electronic data base consulted during the international search (name of data base and, where practicable, search terms used)

3GPP, CJFD, CNTXT, ENTXTC, VEN: 测量, 感知, 能力, 配置信息, 指示, 开启, 优先级, capability, sensing, sensing on, measur+, configuration, indicate, priority

### C. DOCUMENTS CONSIDERED TO BE RELEVANT

| Category* | Citation of document, with indication, where appropriate, of the relevant passages | Relevant to claim No. |
|---|---|---|
| X | CN 113676930 A (HUAWEI TECHNOLOGIES CO., LTD.) 19 November 2021 (2021-11-19) description, paragraphs 112-520, and figures 4-17 | 1-3, 5-6, 8-12, 14-15, 18-21 |
| Y | CN 113676930 A (HUAWEI TECHNOLOGIES CO., LTD.) 19 November 2021 (2021-11-19) description, paragraphs 112-520, and figures 4-17 | 4, 7, 13, 16-17 |
| Y | CN 114501346 A (HUAWEI TECHNOLOGIES CO., LTD.) 13 May 2022 (2022-05-13) description, paragraphs 59-171 | 4, 7, 13, 16-17 |
| A | CN 113784443 A (CHINA ACADEMY OF INFORMATION AND COMMUNICATIONS TECHNOLOGY) 10 December 2021 (2021-12-10) entire document | 1-21 |
| A | XIAOMI. "S1-214101_3GPP_based_Wireless_Sensing_Services" *3GPP tsg_sa\wg1_serv*, 29 October 2021 (2021-10-29), entire document | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 November 2023** | **03 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/109012 |

| Patent document<br>cited in search report | | | Publication date<br>(day/month/year) | Patent family member(s) | Publication date<br>(day/month/year) |
|---|---|---|---|---|---|
| CN | 113676930 | A | 19 November 2021 | None | |
| CN | 114501346 | A | 13 May 2022 | None | |
| CN | 113784443 | A | 10 December 2021 | None | |

Form PCT/ISA/210 (patent family annex) (July 2022)

**EP 4 564 881 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210884815